# EUROPÄISCHE PATENTANMELDUNG

(11) **EP 4 714 649 A1**
(43) Veröffentlichungstag der Anmeldung: **25.03.2026**
(21) Anmeldenummer: 25202128.2
(22) Anmeldetag: 15.09.2025
(51) Int. Cl.: B32B 7/12, B32B 27/04, B32B 27/08, B32B 27/36, B65D 65/46, B65D 81/38

(54) **MEHRTEILIGE THERMISCHE DÄMMUNG TRANSPORTBOXEN**

(30) Priorität: 18.09.2024 DE 102024003012
(71) Anmelder: Thüringisches Institut Für Textil- Und Kunststoff- Forschung E.V., 07407 Rudolstadt (DE)
(72) Erfinder: Ortlepp, Gerald, 07407 Uhlstädt (DE); Reußmann, Thomas, 07407 Rudolstadt (DE)
(74) Vertreter: Plate, Jürgen

(57) **Zusammenfassung**

Die Erfindung betrifft eine biologisch abbaubare, thermisch isolierende Verpackungseinheit und ein Verfahren zu deren Herstellung. Die thermisch isolierende Verpackungseinheit besteht aus unterschiedlich dicht gepackten, flächigen Faserverbundeinzelelementen, die in einen Stützbehälter innenseitig eingebracht werden, wobei alle Dämmkomponenten biologisch abbaubar sind und die verwendeten Materialien zu mindestens 50% aus natürlichen, das heißt in der Natur nachwachsenden Rohstoffen gewonnen werden. Die Wärmedämmkomponenten bestehen aus mindestens 2 Schichten, mit unterschiedlicher Dichte.

## Beschreibung

Die Erfindung betrifft eine biologisch abbaubare, thermisch isolierende Verpackungseinheit und ein Verfahren zu deren Herstellung. Die thermisch isolierende Verpackungseinheit besteht aus unterschiedlich dicht gepackten, flächigen Faserverbundeinzelelementen, die in einen Stützbehälter innenseitig eingebracht werden, wobei alle Dämmkomponenten biologisch abbaubar sind und die verwendeten Materialien zu mindestens 50% aus natürlichen, das heißt in der Natur nachwachsenden Rohstoffen gewonnen werden. Die Wärmedämmkomponenten bestehen aus mindestens 2 Schichten, mit unterschiedlicher Dichte. Die Schicht mit der höheren Dichte aus einem stärker konsolidierten Verbundwerkstoff aus Naturfasern und einer thermoplastischen Matrix oder einem biologisch abbaubaren Kunststoff fungiert als mechanisch stabile Kontaktschicht zum Transportgut. Die Schicht mit der niedrigeren Dichte aus einem weniger stark konsolidierten Verbundwerkstoff aus Naturfasern und einer thermoplastischen Matrix fungiert als Wärmedämmschicht zischen der mechanisch stabilen Schicht hoher Dichte und einem stützenden Außenbehälter. Beide Funktionsschichten bilden in Summe eine thermisch isolierende Verpackungseinheit. Die Verpackungseinheit ist segmentiert aufgebaut und besteht aus Bodenteil, 4 Seitenteilen und Deckel, wobei die transportgutseitige Innenschicht fest mit der wärmedämmenden Außenschicht verbunden ist oder als separater, zusätzlicher Einleger ausgebildet ist. Die beiliegenden Zeichnungen 1 und 2 veranschaulichen die beiden Varianten und die Vorteile der Erfindung.

Derzeit am Markt eingesetzte Thermoisolierboxen für den Transport von Lebensmitteln setzen mehrheitlich auf expandiertes Polystyrol (EPS) oder geschäumtes Polypropylen (EPP). Hierbei kann der Isolierbehälter als gesamte Transportbox ausgeführt sein oder als Einlage in einem Stapelkorb fungieren. Mit diesen beiden Systemen werden alle gestellten Produktfunktionen für den Thermoisoliertransport von Gütern erfüllt. In der Regel bestehen diese Behälter aus einem kastenförmigen Unterteil und einem Deckel. Bei einer lokalen Beschädigung oder extremer Verschmutzung muss das gesamte Kastenteil entsorgt werden. In der Umwelt entsorgte Schaumisolierung zerfallen aufgrund der eingesetzten Polymerbasis zu Mikroplastik, können nicht in absehbaren Zeiträumen in die bestehenden Stoffkreisläufe der Natur integriert werden und verfügen damit über ein Gefahrenpotential für Mensch und Umwelt.

KR102404803B1 beschreibt einen mehrschichtigen Lebensmitteltransportbehälter, wobei die Außenschichten aus einer Holzschicht (Furnier) bestehen und weitere Schichten aus mit synthetischem Harz beschichteten Papierlagen mittels Pressformen miteinander verbunden und in eine dreidimensionale Form gebracht werden.

WO2021/145764A1 beschreibt einen biologisch abbaubaren Verpackungsbehälter aus mehreren Funktionsschichten aus synthetischen Polymeren auf Basis aliphatischer Polyester und Polyvinylalkohol. Zusätzliche Komponenten können dabei Papier und mikrofibrillierte Zellulosefasern sein. Die Behälterkonsolidierung und Formung erfolgt durch Aufschmelzvorgänge bei Einsatz von Extrudern sowie einem thermischen Formpressen.

WO2021/111902A1 beschreibt einen zweiteiligen Papierschaumbehälter für Instantspeisen in Mehrschichtausbildung auf Basis von geschäumtem Papier und Polyvinylalkoholbeschichtung.

WO2021/064422A1 beschreibt einen heimkompostierbaren, spritzgegossenen Lebensmittelbehälter auf Basis von Reisspelzen oder Bambuspulver und einem thermoplastischem Binder von Polylactid (PLA),Polyhydroxyalkanoaten (PHA/PHB), Polyhydroxybutyraten (PHBV), Zelluloseacetat, Sucrose, Kornstärke, Pflanzenharz, Polybutylenesuccinate (PBS), Polycaprolacton (PCL), thermoplastischer Stärke (TPS), Hanf, Kiefernharz, Lignine, Tannine oder deren Kombinationen. Zur Herstellung wird das Verfahren des Spritzgießens genutzt.

WO2021/073669A1 beschreibt ein Portionierbehältnis aus einem Behälter und einer Abdeckung, wobei zumindest der Behälter, vorzugsweise auch die Abdeckung, aus umweltverträglich abbaubarem Fasermaterial mit einer Faserformanlage mittels eines Faserformprozesses aus einer Pulpe als flüssige Lösung mit dem umweltverträglich abbaubarem Fasermaterial hergestellt ist. Als Barriereschichtsystem werden eine Wachsschicht, eine Lackschicht, eine Schicht aus PTFE oder eine keramische Schicht, vorzugsweise eine SiOx-Schicht oder eine Glaskeramik genutzt.

JP2021160807A beschreibt ein sich in Meerwasser abbauende Lebensmittelverpackung auf Basis einer Harzmischung aus Polyhydroxyalkanoat, Polybutylensuccinat und Füllstoff pflanzlichen Ursprungs wie Holzpulver, Bambuspulver, Strohpulver, Schilfpulver, Zellulosepulver, Papierpulver, Stärke, Getreidepulver, Ballaststoffen und Naturfasern, wobei der durchschnittliche Partikeldurchmesser des Füllstoffs pflanzlichen Ursprungs 500 µm oder weniger beträgt.

US11420784B2 beschreibt eine dünnschichtige Lebensmittelverpackung auf Basis von gekräuselten Zellulose- und Zelluloseester-Kurzfasern einer Länge < 6mm und einer Feinheit < 3 Denier. Als Fertigungsverfahren wird der Nasslegeprozess ähnlich der Papiertechnologie beschrieben.

In WO2024/013432A1 wird mittels Einsatz von Extrudern die Herstellung eines Mehrschichtverbundes auf Basis von Holzpartikeln, verschiedene thermoplastischen biologisch abbaubaren Bindern und Füllmitteln beschrieben. Zum Einsatz kommen hierbei die Materialien in Granulatform.

Ziel der vorliegenden Erfindung ist ein nachhaltiges, umweltverträgliches Wärmedämmsystem als Innenlage in einem Transportbehälter, das in Einzelteile zerlegbar ist, raumsparend transportiert, ressourcenschonend in Teilen ausgetauscht, aus nachwachsenden Rohstoffen generiert, stofflich wiederverwertet oder biologisch entsorgt werden kann, bereitzustellen.

Zu diesem Zweck sieht die vorliegende Erfindung eine biologisch abbaubare thermische Isolationseinheit für den Transport in einem Stützbehälter oder Stapelkorb vor, wobei das Isolationssystem aus einer thermisch dämmenden Schicht (100) und aus einer transportgutseitig platzierten Schicht (110) besteht.

Beide Schichten werden zu einem Schichtenverbund (120) zusammengesetzt, der fest oder lose miteinander verbunden ist. Die Schichten (100, 110) und der daraus resultierende Schichtenverbund (120) werden flächig derart ausgebildet, dass sie ineinander gesteckt werden können, so dass sie eine Transportbox mit Deckel ergeben.

Sowohl die thermisch dämmende Schicht (100) als auch die transportgutseitige Schicht (110) sind Faserverbundwerkstoffe aus Naturfasern und einer thermoplastischen Kunststoffmatrix. Alternativ kann die transportgutseitige Schicht auch aus 100% biologisch abbaubarem Kunststoff bestehen.

Im Kontext dieser Erfindung bezieht sich "biologisch abbaubar" auf einen Abbau, der durch die Einwirkung von Mikroorganismen wie Bakterien, Pilzen und Algen entsteht, wobei hier mindestens die Abbaubarkeit gemäß DIN EN 13432 erfüllt ist.

Als thermoplastische Kunststoffmatrix, auch nur als Matrix bezeichnet, wird ein biologisch im Industriekompost abbaubarer Kunststoff verwendet, welcher unterhalb von 210°C schmilzt. Hierfür eignen sich beispielsweise Polylactid (PLA), Polybutylensuccinat (PBS), Polyhydroxyalkanoaten (PHA/PHB), Polycaprolacton (PCL), Polypropylencarbonat (PPC), Polybutylen(adipat-co-terepththalat) (PBAT), Polybutylen(succinat-co-terephtlatat) (PBST), Polybutylen(succinat-co-adipat) (PBSA), oder Celluloseester.

Die Naturfaser besteht vorzugsweise aus Bastfasern, wie beispielsweise aus Bambus, Hanf, Jute, Hopfen, Ramie, Weizen oder Sägepalme, oder aus Hartfasern, wie beispielsweise aus Sisal, Yucca, Palmen, oder aus den Fruchtfasern der Kokosnuss.

Für die thermisch dämmende Schicht (100) wird ein Faserverbundwerkstoff bestehend aus 40-90% Naturfasern und 10-60% Matrix derart hergestellt, dass die Dichte des Faserverbundwerkstoffs 0,04 g/cm³ bis 0,1 g/cm³ beträgt.

Für die transportgutseitige Schicht (110) wird ein Faserverbundwerkstoff bestehend aus 30-80% Naturfasern und 20-70% Matrix derart hergestellt, dass die Dichte 0,2 g/cm³ bis 1 g/cm³ beträgt. Alternativ kann die transportgutseitige Schicht aus 100% biologisch abbaubarem Kunststoff bestehen. Diese Schicht stellt gleichzeitig eine Siegelschicht gegen Wasser dar, so dass die außenliegende Schicht (100) gegen Feuchtigkeit geschützt ist, wie sie üblicherweise im Innenraum eines Transportbehälters für Lebensmittel auftritt.

Ein weiterer Vorteil ist die polymergleiche Gestaltbarkeit aller Funktionsteile und Schichten aus Naturfasern und einer thermoplastisch biologisch abbaubaren Matrix als Grundlage, neben einer biologischen Entsorgung eine stoffliche Wiederverwertung beispielsweise über die Stufen Granulierung, Compoundierung und Spritzguss zu realisieren.

Dadurch steht ein biologisch abbaubares Alternativmaterial zu herkömmlich verwendeten erdölbasierten Kunststoffen auf Basis von Polystyrol oder Polypropylen mit stofflichem Wiederverwertungspotenzial als nachhaltiges Produkt zur Verfügung.

Die Herstellung der flächigen Verbundplatten (100, 110) erfolgt aus einer Faser/Fasermischung bestehend aus einer oder mehreren Naturfaserarten und einer thermoplastischen, biologisch abbaubaren Faser mit einem Erweichungspunkt unter 210°C mittels trockener Vliesherstellung über die Schritte einer Schichtbildung mittels Krempel, Karde oder Wirrvliesbildner, Täfeln und thermische Druckverfestigung auf die gewünschte Flächenmasse und Zieldichte. Bei Erfordernis kann eine mechanische Verfestigung vor der thermischen Konsolidierung erfolgen. Die Herstellung der thermisch isolierenden Schicht (100) und der siegelnden Schutzschicht (110) erfolgen getrennt und unterscheiden sich hinsichtlich Flächenmasse (Isolierschicht: 1000-2500 g/m², Dicke (1,5 - 3 cm; Siegelschicht: 200 - 600 g/m², Dicke 0,3 bis 1,5 mm), Dichte und wahlweise in der Zusammensetzung von Naturfaser und Thermoplastanteil.

Die thermische Verfestigung erfolgt so, dass die thermisch isolierende Schicht (100) eine Enddichte im Bereich von 0,04g/cm³ bis 0,1 g/cm³ und die versiegelnde Schutzschicht (110) eine Dichte im Bereich von 0,2 bis 1 g/cm³ aufweist. Die Faserverbundschichten werden entsprechend der Innenmaße der Transportbehälter so zugschnitten, dass sie in Form von 4 flächigen Seitenteilen, Boden und Deckel eine lückenlose Innenschicht im Transportbehälter bilden. Der Mehrschichtaufbau erfolgt so, dass die versiegelnd wirkende Schutzschicht höherer Dichte (110) zum Transportgut zeigt. Die dünnere Siegelschicht (110) im Kontakt mit dem Transportgut kann dabei auf die dickere Dämmschicht (100) in einem vorherigen Prozess aufkaschiert, mittels biologisch abbaubarem, nicht wasserlöslichem Kleber flächige verklebt oder lose als eine oder mehrere leicht austauschbare Einzelkomponenten passgenau transportgutseitig angeordnet sein.

Die Wärmeleitfähigkeit der thermisch isolierenden Platten (120) liegt im Bereich von 0,02 bis 0,08 W/(m*K), vorzugsweise zwischen 0,04 und 0,055 W/(m*K).

Die äußere thermisch isolierende Schicht (100) hat eine Dicke von 1,4 - 5 cm und die innere wasserabweisende Schicht (110) hat eine Dicke von 0,01 - 0,3 cm. Die Gesamtdicke der biologisch abbaubaren Platten (120) liegt zwischen 1,41 - 5,3 cm.

Wie erwähnt, weisen die innere (tranportgutseitige) Siegel- und Schutzschicht und die äußere Isolationsschicht eine unterschiedliche Dicke auf. Es versteht sich, dass verschiedene Kombinationen von Schichten und Dicken möglich sind.

Bevorzugte Anwendungsformen sind quadratische oder rechteckige Platten, die kleberfrei an die Seiten und am Boden im Innenraum einer Transportbox passgenau zu einer lückenlosen Dämmschicht eingeklemmt werden. Das Deckelelement ist ebenfalls plattenförmig je nach Transportbox quadratisch oder rechteckig ausgebildet. Die Dämmplatten können dabei im Kantenbereich abgestuft oder verzahnt sein, um formschlüssig die Lage und Anordnung der Platten zueinander zu stabilisieren.

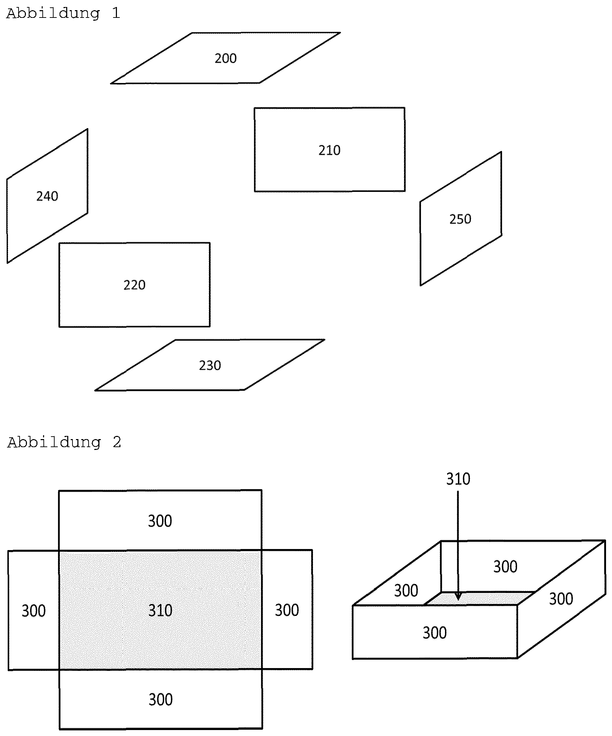

Abbildung 1 zeigt den schematischen Aufbau und Anordnung einer sechsteiligen Wärmedämmung bestehend aus 4 Seitenteilen (210, 220, 240 und 250), Boden (230) und Deckel (200).

Abbildung 2 zeigt das Prinzip von 2 feuchtesperrenden und mechanisch die Dämmung schützenden dünnen Einlegerschichten (300), die am Boden (310) infolge der Doppellage eine hohe mechanische Schutzwirkung ausbilden.

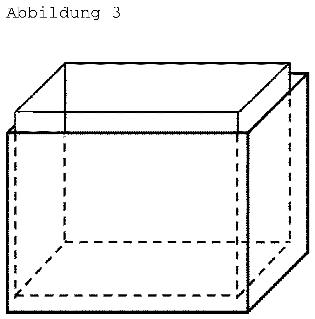

Abbildung 3 zeigt das Prinzip von Dämmung und Einlegern in einem starren Stapelkorb. Zur Veranschaulichung wurde hier der Deckel nicht mit abgebildet.

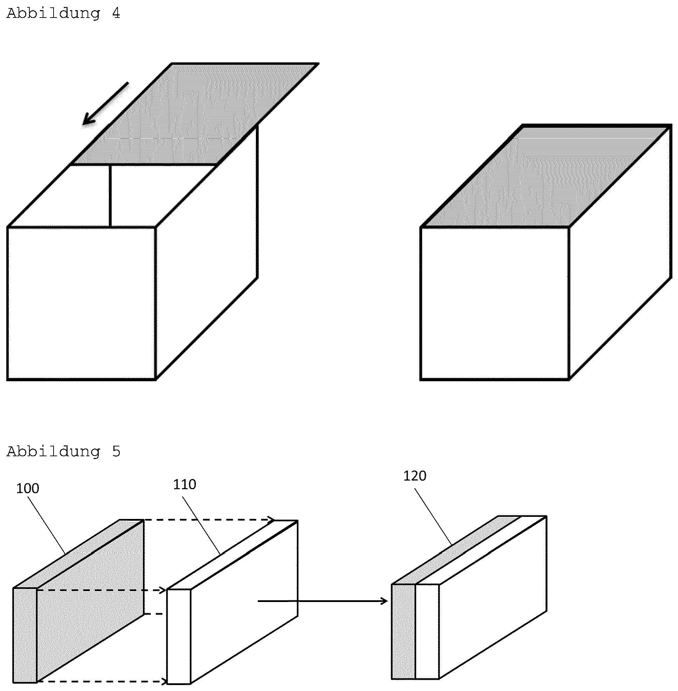

Abbildung 4 zeigt ein Wärmedämmsystem für Transportboxen aus 6 rechteckigen Dämmplatten mit 4 Seitenteilen sowie Boden- und Deckelteil sowie zwei transportgutseitig platzierten, dünnen Einlegerschichten als Feuchtesperre und mechanischen Schutz der Dämmplatten in der Ansicht mit offenem und der Ansicht mit geschlossenem Decke. Als Stapelkorb dient hier eine im Lebensmitteltransport genutzten ungedämmten Klappboxvariante, die hier abgebildet mit einer zusätzlich temporären Dämmung ausgestattet ist

Abbildung 5 zeigt den Aufbau der biologisch abbaubaren Platten (120), welche aus 2 Schichten bestehen. Die äußere Schicht (100) wirkt thermisch isolierend wirkt und ist ein Faserverbund aus Naturfasern und thermoplastischem Binder. Die innere Schicht (110) ist wasserabweisend, besitzt eine höhere Dichte als die äußere Schicht (110) und ist wahlweise ein Faserverbund aus Naturfasern und thermoplastischem Binder oder ein reines thermoplastisches Polymer.

### Beispiele

Als Materialien wurden eingesetzt Rösthanf der VOFA Vogtlandfaser GmbH & Co. KG und Polylactidfaser (PLA), Ingeo von der Trevira GmbH mit 6,7 dtex / 60 mm.

### Ausführungsbeispiel 1

Als Ausgangsmaterialien für die temperaturisolierende Schicht (100), geringerer Dichte wurden gerösteter Hanf mit einer mittleren Feinheit von 105,7 dtex und einer mittleren Faserlänge von 54,9 mm und eine Polylactidfaser (PLA) mit einer Feinheit von 6,7 dtex und einer Faserlänge von 60 mm eingesetzt. Mit konventionellen, textilen Öffneraggregaten wurden die Fasern aus einem Mischbett heraus in einem Verhältnis von 70% Hanf und 30% PLA innig vermischt und anschließend über einen Füllschacht einer Faserblasanlage in eine ebene Plattenform eingeblasen und mittels Heißluftdurchströmung verfestigt. Angewandte Verarbeitungsparameter waren:

| | |
|---|---|
| Flächenmasse [g/m²]: | 1800 |
| Enddicke der Plattenware [mm]: | 20 |
| Einblashöhe [cm]: | 6 |
| Spalt beim Verfestigen [cm]: | 3 |

Die Bestimmung der Wärmeleitfähigkeit nach DIN 52612 bzw. ISO 8302 bei einer Messzeit von 60 min zwischen einer Kaltplatte von 5°C und einer Warmplatte von 15°C ergab einen Wert von 0,045 W/(m*K). Die Wärmeleitfähigkeit sollte den Wert von 0,06 W/(m*K) nicht überschreiten. Eine handelsübliche Polystyroldämmung liegt bei 0,05 W/(m*K).

Die innere, transportgutseitige Schicht (110) basierte ebenfalls auf den Naturfasern Rösthanf und der thermoplastischen Faser Polylactid (PLA). Das Mischungsverhältnis betrug ebenfalls 70% PLA und 30% Hanf. Diese Fasermischung wurde mittels Krempel zu einem Faserflor und anschließend über einen Quertäfler in eine flächige Schichtung mit einer Flächenmasse von 350 g/m² gebracht und anschließend mit 70 Stichen/cm² vernadelt. Die anschließende thermische Verfestigung und Konsolidierung zu einer Plattenware erfolgte mit einer Thermofixanlage der Fa. Schott & Meissner bei einer Temperatur von 200°C und einem Spaltabstand von 0,6 mm.

Danach wurden beide Grundschichten des Dämmsystems entsprechend der Innenmaße des Transportbehälters zugeschnitten, wobei jeweils 4 Seitenteile, ein Bodenteil und ein Deckelteil zugeschnitten wurden. Mittels Hotmeltverfahrens wurde bei den Seitenteilen die Dämmplatten und die Siegel- und Schutzschicht als gleichdimensionierter Zuschnitte unter Einsatz eines aufgeschmolzenen Polycaprolactongranulates flächig miteinander verbunden. Beim Deckel und Bodenteil wurden beide Dämmkörperseiten mit der Siegelschicht kaschiert. Bei den Seitenteilen wurde nur eine Seite, die später zum Transportgut platziert ist, mit der Siegelschicht kaschiert.

### Ausführungsbeispiel 2

Als Ausgangsmaterialien für die temperaturisolierende Schicht (100), geringerer Dichte wurden gerösteter Hanf und eine Polylactidfaser (PLA) eingesetzt. Mit konventionellen, textilen Öffneraggregaten wurden die Fasern aus einem Mischbett heraus in einem Verhältnis von 70% Hanf und 30% PLA innig vermischt und anschließend mittels Krempel, Täfler und Nadelmaschine zu Vliesstoffbahnen verarbeitet.

Herbei wurden Vliesbahnen mit den Flächenmassen 350 g/m² und 1400 g/m² erzeugt.

Mittels thermischer Verfestigung über Heißluftdurchströmung und Pressdruck bei eingestellten Spaltabständen wurden die 1400 g/m² schweren Bahnen mit einem Spalt von 20 mm weniger intensiv und die 350 g/m² schweren Bahnen mit einem Spaltabstand von 0,8 mm intensiver verdichtet und thermisch bei 200°C verfestigt.

Die Bestimmung der Wärmeleitfähigkeit der 25 mm dicken Platten mit 1400 g/m² nach DIN 52612 bzw. ISO 8302 bei einer Messzeit von 60 min ergab einen Wert von 0,048 W/(m*K). Die innere, transportgutseitige Schicht (110) mit einer Endflächenmasse von 350 g/m² wurde mit einer Vernadelungsdichte > 100 Stichen/cm² stark vorverfestigt. Die Dämmplatten mit 1400 g/m² wurden anschließend entsprechend der Innenmaße des Transportbehälters so zugeschnitten, dass sie passgenau als 4 Seitenteile, ein Bodenstück und ein Deckel eine dicht schließende Innenauskleidung des Transportbehälters ergeben. Die dünnere, stärker verdichtete mechanische Schutzschicht mit einer Flächenmasse von 350 g/m² wurde rechteckig so zugeschnitten, dass es je einen längs und eine quer einlegbarer entsprechend der Innenabmaße rechtwinklig abgeknickter Inliner entsteht, der lose mittels Klemmung die Kontaktschicht zum Transportgut ergibt. Durch die Kombination von 2 separaten Inlinerschichten, die im Bodenteil des Transportbehälters eine Doppelschicht ergeben, wird der Bodenteil mit der höchsten mechanischen Beanspruchung beim Transport besonders geschützt.

## Patentansprüche

1. Mehrteiliger, in Einzelteile zerlegbarer Wärmedämmkörper aus biologisch abbaubaren Platten (120), welche aus 2 Schichten bestehen, wobei die äußere Schicht (100) thermisch isolierend wirkt und ein Faserverbund aus Naturfasern und thermoplastischem Binder ist und die inneren Schicht (110) wasserabweisend ist und eine höhere Dichte hat als die äußere Schicht und ein Faserverbund aus Naturfasern und thermoplastischem Binder oder ein reines thermoplastisches Polymer ist.

2. Mehrteiliger Wärmedämmkörper nach Anspruch 1, **dadurch gekennzeichnet, dass** die Naturfasern vorzugsweise Bastfasern, wie beispielsweise aus Bambus, Hanf, Jute, Hopfen, Ramie, Weizen oder Sägepalme, oder Hartfasern, wie beispielsweise aus Sisal, Yucca, Palmen, oder aus den Fruchtfasern der Kokosnuss sind.

3. Mehrteiliger Wärmedämmkörper nach Anspruch 1, **dadurch gekennzeichnet, dass** der thermoplastische Binder und/oder das thermoplastische Polymer aus einem biologisch im Industriekompost abbaubaren Kunststoff besteht, welcher unterhalb von 210°C schmilzt, wie beispielsweise Polylactid (PLA), Polyhydroxyalkanoaten (PHA/PHB) Polybutylensuccinat (PBS), Polycaprolacton (PCL), Polypropylencarbonat (PPC), Polybutylen(adipat-co-terepththalat) (PBAT), Polybutylen(succinat-co-terephtlatat) (PBST), Polybutylen(succinat-co-adipat) (PBSA), oder Celluloseestern.

4. Mehrteiliger Wärmedämmkörper nach Anspruch 1 bis 3 **dadurch gekennzeichnet, dass** die äußere thermisch isolierende Schicht (100) eine Dicke von 1,4 - 5 cm hat und die innere wasserabweisende Schicht (110) eine Dicke von 0,01 - 0,3 cm hat und die Gesamtdicke der biologisch abbaubaren Platten (120) 1,41 - 5,3 cm beträgt.

5. Mehrteiliger Wärmedämmkörper nach Anspruch 1 - 6, **dadurch gekennzeichnet, dass** die biologisch abbaubaren Platten (120) eine Wärmeleitfähigkeit nach DIN 52612 oder ISO 8302 von 0,02 bis 0,08 W/(m*K), vorzugsweise 0,04 bis 0,055 W/(m*K) aufweist.

6. Mehrteilige Wärmedämmung nach Anspruch 1 bis 7 **dadurch gekennzeichnet, dass** die einzelnen Komponenten so zugeschnitten werden, dass sie als separate Deckel-, Boden- und Seitenteile an den Innenseiten eines Transportbehälters formschlüssig einpassbar sind.

7. Mehrteilige Wärmedämmung nach Anspruch 1 bis 12 **dadurch gekennzeichnet, dass** die Platten 100 und 110 entweder lose auf- oder aneinander liegen oder miteinander fest verbunden sind, wobei die feste Verbindung hervorgerufen wird durch Verkleben mit einem biologisch abbaubaren Kleber oder verschweißen.

8. Mehrteilige Innendämmung nach Anspruch 1 bis 13 **dadurch gekennzeichnet, dass** sie zum Kühlen und Warmhalten von Gütern im Temperaturbereich von - 20°C bis + 90°C einsetzbar sind.
